# EUROPÄISCHE PATENTANMELDUNG

(11) **EP 3 103 589 A1**
(43) Veröffentlichungstag der Anmeldung: **14.12.2016**
(21) Anmeldenummer: 16172938.9
(22) Anmeldetag: 03.06.2016
(51) Int. Cl.: B25B 21/00

(54) **VERFAHREN ZUR BEWERTUNG EINES SIGNALS**

(30) Priorität: 12.06.2015 DE 102015109448
(71) Anmelder: Dürr Assembly Products GmbH, 66346 Püttlingen (DE)
(72) Erfinder: Kurt, Ismail, 66333 Völklingen (DE); Petzinger, Christian, 66265 Heusweiler (DE); Pfeil, Holger-Thorsten, 66292 Riegelsberg (DE)
(74) Vertreter: Patentanwaltskanzlei Vièl & Wieske PartGmbB

(57) **Zusammenfassung**

Die vorliegende Erfindung betrifft ein Verfahren zur Bewertung eines Signals, das die auf ein Einstellwerkzeug zur elektrischen, pneumatischen und/oder hydraulischen Betätigung von Einstellmitteln zur Justierung von Aggregaten und/oder Sensoren eines Kraftfahrzeugs zumindest in dem Betriebszustand, in dem das Einstellwerkzeug in Wirkverbindung mit den Einstellmitteln ist, wirkende manuelle Betätigungskraft repräsentiert. Nach der vorliegenden Erfindung wird bei einem Überschreiten eines Schwellwertes der manuellen Betätigungskraft der Antrieb des Einstellwerkzeugs blockiert und/oder eine Bewertung eines Messsignals, das die Justierung des Aggregates und/oder des Sensors repräsentiert, nicht als ordnungsgemäß zugelassen und/oder ein Hinweissignal auf einen Fehlerzustand ausgegeben.

## Beschreibung

Die vorliegende Erfindung betrifft gemäß Anspruch 1 ein Verfahren zur Bewertung eines Signals nach dem Oberbegriff des Anspruch 1.

Das Signal repräsentiert die auf ein Einstellwerkzeug zur elektrischen, pneumatischen und/oder hydraulischen Betätigung von Einstellmitteln zur Justierung von Aggregaten und/oder Sensoren eines Kraftfahrzeugs wirkende manuelle Betätigungskraft zumindest in dem Betriebszustand, in dem das Einstellwerkzeug in Wirkverbindung mit den Einstellmitteln ist. Die Betätigung der Einstellmittel erfolgt elektrisch, pneumatisch und/oder hydraulisch. Die manuelle Betätigungskraft betrifft damit nicht die Kraft, mit der die Einstellmittel betätigt werden im Sinne der Justierung von Aggregaten und/oder Sensoren. Diese wirkende Kraft resultiert aus der elektrischen, pneumatischen und/oder hydraulischen Betätigung. Die manuelle Betätigungskraft betrifft vielmehr die Kraft, mit der das Einstellwerkzeug jeweils auf die Einstellmittel aufgesetzt wird. Bestehen die Einstellmittel beispielsweise aus Einstellschrauben, wird das Einstellwerkzeug mit einer manuellen Betätigungskraft auf die Schraube aufgesetzt. Diese manuelle Betätigungskraft muss dabei so groß sein, dass das Einstellwerkzeug beim elektrischen, pneumatischen und/oder hydraulischen Antrieb nicht von der Schraube abrutscht.

Die Aggregate und Sensoren können beispielsweise die Scheinwerfer eines Kraftfahrzeuges sein, eine Kamera zur Beobachtung des rückwärtigen Verkehrsraumes oder ein Sensor zur Erfassung von Daten zur Verwendung in ACC-Systemen. Derartige Aggregate und Sensoren müssen auf die Richtung der Fahrzeugkarosserie in x-Richtung (Fahrzeuglängsrichtung), y-Richtung (Fahrzeugquerrichtung) und z-Richtung (vertikale Richtung) ausgerichtet werden. Anstelle der x-Richtung sowie der y-Richtung der Fahrzeugkarosserie kann die Ausrichtung auch auf die geometrische Fahrachse des Fahrzeugs ausgerichtet werden, die - zumindest im Rahmen gewisser Toleranzen bei der Einstellung der geometrischen Fahrachse über die entsprechenden Fahrzeugparameter der Spurwinkel und Sturzwinkel der Fahrzeugräder - mit der x-Richtung übereinstimmt.

Die Einstellmittel können beispielsweise Einstellschrauben sein, die die Orientierung der Aggregate bzw. der Sensoren betreffen. Diese Einstellmittel sind zu unterscheiden von den Befestigungsmitteln, mit denen die Aggregate bzw. die Sensoren an der Fahrzeugkarosserie mechanisch befestigt werden. Nach der mechanischen Befestigung werden die Aggregate und/oder Sensoren mit den Einstellmitteln justiert.

Die Aggregate und/oder Sensoren sind an der Fahrzeugkarosserie insbesondere im vorderen Bereich befestigt. Dieser vordere Bereich kann abhängig vom Fahrzeugtyp als Frontschürze aus Kunststoff gefertigt sein oder als vorderer Teil eines Fahrzeugs aus Gründen der Verformbarkeit und Nachgiebigkeit bei möglichen Unfällen mit Personen aus dünnem Blech gefertigt sein. Auch bei einer Befestigung im hinteren Bereich - beispielsweise für eine Kamera zur Beobachtung des rückwärtigen Verkehrsraumes - kann eine Befestigung an der Heckschürze in einem Bereich erfolgen, der aus Kunststoff gefertigt sein kann und entsprechend nachgiebig gestaltet ist, um bei Bagatellunfällen im Bereich niedriger Geschwindigkeiten die Kräfte durch Verformung aufzunehmen oder um Gewicht zu sparen.

Daraus ergibt sich, dass die Fahrzeugkarosserie gerade in dem Bereich verformbar ist, wenn dieser Bereich mit einer Gewichtskraft beaufschlagt wird. Wird die Gewichtskraft wieder entfernt, geht im Rahmen der vorliegenden Problemstellung das entsprechende Fahrzeugteil wieder in seine Ausgangslage zurück. Dies liegt im Vergleich zu einem Unfall daran, dass die auftretenden Kräfte bei einem manuellen Aufdrücken eines Einstellwerkzeuges auf die Einstellmittel im Vergleich zu den Kräften bei einem Unfall begrenzt sind.

Die Betätigung des Einstellwerkzeugs zur Einwirkung auf die Einstellmittel kann von dem Werker erfolgen oder auch automatisiert erfolgen, indem das Einstellwerkzeug nach dessen Positionierung auf den Einstellmitteln angesteuert wird im Sinne eines Antriebs der Einstellmittel, bis die Justierung des Aggregats bzw. Sensors als ordnungsgemäß erkannt wurde.

Der vorliegenden Erfindung liegt die Aufgabe zu Grunde, die Justierung derartiger Aggregate und Sensoren zu vereinfachen.

Dies wird gemäß Anspruch 1 gelöst, indem bei einem Überschreiten eines Schwellwertes der manuellen Betätigungskraft der Antrieb des Einstellwerkzeugs blockiert wird und/oder eine Bewertung eines Messsignals, das die Justierung des Aggregates und/oder des Sensors repräsentiert, nicht als ordnungsgemäß zugelassen wird und/oder ein Hinweissignal auf einen Fehlerzustand ausgegeben wird.

Damit wird dem Problem Rechnung getragen, dass durch ein Einwirken einer manuellen Betätigungskraft auf das Einstellwerkzeug eine Verformung der Karosserie einhergeht, wenn diese manuelle Betätigungskraft groß genug ist.

Wenn eine Messung der Justierung des Aggregates bzw. des Sensors in diesem verformten Zustand der Karosserie erfolgt, wird unter Umständen zunächst in dem verformten Zustand der Karosserie eine Justierung gemessen, die als ordnungsgemäß erkannt wird. Wenn das Einstellwerkzeug entfernt wird und damit von dem Einstellwerkzeuge keine manuelle Betätigungskraft mehr auf die Karosserie einwirkt, die eine Verformung der Karosserie bewirkt, entspannt sich die Karosserie und geht in ihre ursprüngliche Form zurück.

Damit ändert sich die Justierung des Aggregates bzw. der Sensoren gegenüber der erfolgten Messung im verformten Zustand der Karosserie, in der die Justierung als ordnungsgemäß erkannt wurde.

Dabei besteht das Problem, dass die Justierung im "entspannten Zustand" der Fahrzeugkarosserie nicht ordnungsgemäß ist, obwohl die Justierung bei der Durchführung der Messung als ordnungsgemäß erkannt wurde.

Bei der manuellen Betätigungskraft geht es also um die Kraft, mit der das Einstellwerkzeug auf die Einstellmittel aufgedrückt wird.

Eine erste Maßnahme zur Lösung des Problems besteht darin, bei einem erkannten Überschreiten eines Schwellwertes der manuellen Betätigungskraft den Antrieb des Einstellwerkzeugs zu blockieren.

Dies erweist sich insbesondere als vorteilhaft, wenn dem Werker bei der Durchführung der Einstellarbeiten die gerade aktuelle Justierung zumindest in dem Sinne angezeigt wird, ob diese ordnungsgemäß ist oder nicht.

Gegebenenfalls kann dem Werker dabei auch angezeigt werden, in welcher Richtung die Einstellmittel betätigt werden müssen, um zu einer als ordnungsgemäß erkannten Justierung zu kommen.

Diese Ausgestaltung kann noch weiter verbessert werden, wenn dem Werker nicht nur die Richtung angezeigt wird, in die die Einstellmittel betätigt werden müssen, um zu einer als ordnungsgemäß erkannten Justierung zu gelangen sondern weiterhin das Ausmaß, um das die Einstellmittel betätigt werden müssen - d.h. ein Maß für die Größenordnung der aktuell erkannten Justierung von der als ordnungsgemäß erkannten Justierung.

Dieses Blockieren des Einstellwerkzeugs ist auch realisierbar, wenn das Einstellwerkzeug nach dessen Positionierung auf den Einstellmitteln automatisiert angetrieben wird, um die ordnungsgemäße Justierung des Aggregates bzw. des Sensors zu erreichen.

Wenn der Antrieb des Einstellwerkzeugs blockiert wird, kann der Werker unmittelbar bereits bei der Durchführung der Einstellarbeiten erkennen, dass seine manuelle Betätigungskraft zu groß ist und in diesem Moment die Anzeige der Justierung fehlerhaft sein kann. Der Werker erkennt daraus bereits bei der Durchführung der Einstellarbeiten, dass er seine manuelle Betätigungskraft reduzieren muss, um eine ordnungsgemäße Anzeige der aktuell gemessenen Justierung zu erhalten bzw. um die Durchführung der Einstellarbeiten überhaupt zu ermöglichen.

Diese unmittelbare Rückmeldung an den Werker erweist sich insofern als vorteilhaft, weil die Situation vermieden wird, dass zunächst mit einer entsprechend großen manuellen Betätigungskraft des Werkers die Einstellarbeiten vorgenommen werden, dabei die Justierung während der Durchführung der Einstellarbeiten zunächst als ordnungsgemäß erkannt und ggf. angezeigt wird und nach dem Entfernen des Einstellwerkzeugs und dem Entspannen der Fahrzeugkarosserie die tatsächliche Justierung nicht ordnungsgemäß ist.

Sofern es von dem Werker ausdrücklich gewünscht wird, das Einstellwerkzeug mit einer größeren manuellen Betätigungskraft auf die Einstellmittel aufzudrücken, kann noch ein Betätigungselement vorhanden sein, mit dessen Betätigung der Werker die Blockierung des Einstellwerkzeugs überbrücken kann. Dieses Betätigungselement kann beispielsweise ein Taster sein, so dass die Blockierung überbrückt wird, solange der Taster gedrückt ist. Damit kann der Werker eine festsitzende Schraube mit dem Einstellwerkzeug losdrehen.

Zusätzlich oder alternativ kann bei einem erkannten Überschreiten des Schwellwertes der manuellen Betätigungskraft eine Bewertung eines Messsignals, das die Justierung des Aggregates und/oder des Sensors repräsentiert, als ordnungsgemäß unterbunden werden.

Dies betrifft die Bestätigung am Ende des Mess- und Einstellvorganges, dass die Justierung als ordnungsgemäß erkannt wurde und abgeschlossen ist.

Die Voraussetzungen für diese Bestätigung können von dem System selbsttätig erkannt werden, wenn die aktuell gemessene Justierung im Rahmen der Toleranzen für die Einstellung mit dem Sollwert übereinstimmt.

Sofern die aktuelle Justierung dem Werker angezeigt wird, kann die Bestätigung auch darin bestehen, dass der Werker ein Bestätigungssignal eingibt, wenn die Einstellarbeiten beendet sind, weil die Justierung von ihm selbst als ordnungsgemäß erkannt wird. Bei dieser Ausgestaltung kann das "Nicht-Zulassen" bzw. "Unterbinden" darin bestehen, dass die Eingabe des Bestätigungssignals durch den Werker blockiert wird. In diesem Fall erhält der Werker eine unmittelbare Rückmeldung, dass die Bedingungen nicht ordnungsgemäß sind für die Durchführung der Messung der Justierung.

Bei dieser Vorgehensweise werden die ordnungsgemäßen Bedingungen für die Messung kontrolliert, wenn die abschließende Messung erfolgen soll, um beispielsweise die ordnungsgemäße Justierung in ein Protokoll einzutragen.

Bei dieser Ausgestaltung - in diesem Fall nicht zusätzlich zu der zuvor beschriebenen Maßnahme der Blockade des Einstellwerkzeuges - kann bei der Durchführung der Einstellarbeiten eine größere manuelle Betätigungskraft ausgeübt werden, wenn beispielsweise eine Justierschraube als Einstellmittel hängt und das Einstellwerkzeug kurzzeitig mit einer größeren manuellen Betätigungskraft aufgedrückt werden muss, um die Gängigkeit der Justierschraube zu erreichen. Durch die größere manuelle Betätigungskraft wird erreicht, dass sich das Einstellwerkzeug in die Schraube eingedrückt wird und sich bei einer festsitzenden Schraube nicht so leicht aus der Aufnahme des Einstellwerkzeugs im Kopf der Schraube herausdreht. In einer solchen Situation ist es vorteilhaft, wenn das Einstellwerkzeug nicht sofort blockiert, wenn das Einstellwerkzeug mit einer manuellen Betätigungskraft oberhalb des Schwellwertes aufgedrückt wird. Bei der eigentlichen Messung wird die manuelle Betätigungskraft hingegen bewertet.

Alternativ oder zusätzlich kann ein Hinweissignal auf einen Fehlerzustand ausgegeben werden.

Dabei kann die Kontrolle über die Einstellarbeiten beim Werker verbleiben, wenn dieser durch das Hinweissignal lediglich unterstützt wird.

Es ist auch sinnvoll, bei einer der vorstehend beschriebenen Maßnahmen wie der Blockierung des Einstellwerkzeuges oder der Nicht-Zulassung der Erkennung der Justierung als ordnungsgemäß dem Werker ein Hinweissignal auszugeben, damit der Werker den Zustand des Bedienungsfehlers unterscheiden kann von einer Fehlfunktion des Systems.

Bei der Ausgestaltung nach Anspruch 2 ist die Messeinrichtung in das Einstellwerkzeug integriert oder dem Einstellwerkzeug zugeordnet.

Die Messeinrichtung kann bei einem Einstellwerkzeug beispielsweise aus einer Feder bestehen, die durch die manuelle Betätigungskraft zusammengedrückt wird. Dabei kann eine Endlage definiert werden, in der ein Schalter/Taster geschlossen wird, so dass das Erreichen dieser Endlage erkannt werden kann. Das Einstellwerkzeug kann in diesem Fall aus zwei Teilen bestehen, die in Richtung der manuellen Betätigungskraft gegeneinander verschiebbar sind. Durch die Feder werden die beiden Teile auseinander gedrückt, so dass bei einer manuellen Betätigungskraft die Feder zusammengedrückt wird.

Dadurch ist eine vergleichsweise einfache Ausgestaltung gegeben, die auf das Einstellwerkzeug wirkende manuelle Betätigungskraft zu erfassen.

Dies entspricht der Ausgestaltung nach Anspruch 3, wonach das Signal abgeleitet wird, indem durch die Betätigungskraft eine Feder zusammengedrückt oder gestreckt wird, wobei dem Federweg ein Endpositionsschalter zugeordnet ist.

Bei der Ausgestaltung nach Anspruch 4 erfolgt eine Bewertung der Messsignals als nicht ordnungsgemäß, indem die Eingabe eines Bestätigungssignals durch den Werker für eine ordnungsgemäße Messung blockiert wird.

Damit erhält der Werker eine Rückmeldung, dass keine ordnungsgemäßen Bedingungen für die Durchführung einer Messung der Justierung vorliegen.

Bei der Ausgestaltung nach Anspruch 5 wird das Hinweissignal auf den Fehlerzustand optisch, akustisch und/oder haptisch ausgegeben.

Das haptische Hinweissignal kann beispielsweise darin bestehen, das in das Einstellwerkzeug ein antreibbares Gewicht mit einer Unwucht vorhanden ist. Bei einem Antrieb dieses Gewichts vibriert das Einstellwerkzeug. Bei dieser Ausgabe des Hinweissignals erweist es sich als vorteilhaft, dass der Benutzer weitgehend unabhängig von anderen Umgebungsbedingungen wie Lärm oder schlechten Lichtverhältnissen in einfacher Weise eine Rückmeldung bekommt.

Das akustische Hinweissignal kann beispielsweise ein Signalton sein.

Ein optisches Hinweissignal kann auf einer Anzeigeeinrichtung sichtbar gemacht werden.

Es sind auch Werkzeuge bekannt, bei denen der Antrieb in Gang gesetzt wird, wenn erkannt wird, dass das Werkzeug aufgesetzt wurde. Gegebenenfalls kann eine solche Ausgestaltung mit dem Verfahren nach der vorliegenden Erfindung kombiniert werden. Dann wird die gemessene Betätigungskraft dahin gehend bewertet, ob dieses einen unteren Grenzwert übersteigt. Dieser untere Grenzwert kann in etwa dem Eigengewicht des Einstellwerkzeuges entsprechen, das auf das Kopplungsmittel zu den Einstellmitteln am Fahrzeug wirkt. Übersteigt die manuelle Betätigungskraft diesen unteren Grenzwert, ist dies ein Kriterium, den Antrieb für die Kopplungsmittel in Gang zu setzen. Übersteigt hingegen die manuelle Betätigungskraft nicht nur diesen unteren Grenzwert sondern den Schwellwert im Sinne der vorliegenden Erfindung, werden die im Rahmen dieser Erfindung vorgeschlagenen Maßnahmen ergriffen. Der Schwellwert im Sinne dieser Erfindung ist größer als der untere Grenzwert.

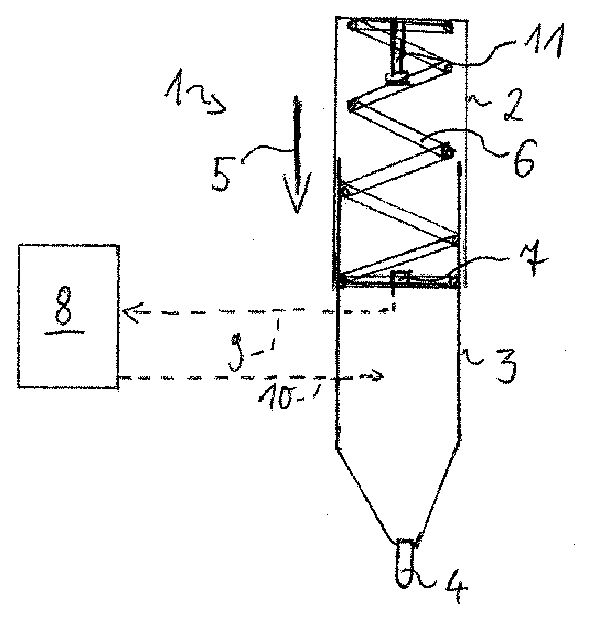

Ein Ausführungsbeispiel der Erfindung ist in der Zeichnung dargestellt. Die Figur zeigt ein Einstellwerkzeug 1, das aus zwei Teilen 2 und 3 besteht. Das Einstellwerkzeug weist ein Kopplungsmittel 4 für ein Einstellmittel auf, das in dem dargestellten Ausführungsbeispiel eine Einstellschraube ist. Das Kopplungsmittel 4 ist in dem dargestellten Ausführungsbeispiel ein Bit für eine Schraube.

Das Kopplungsmittel 4 wird mittels eines Elektromotors angetrieben, der in dem Einstellwerkzeug 1 angeordnet ist.

Das Einstellwerkzeug 1 wird von dem Werker mit einer manuellen Betätigungskraft in axialer Richtung 5 des Einstellwerkzeugs 1 auf das Einstellmittel aufgesetzt. Der Werker greift dieses Einstellwerkzeug im Bereich des Teiles 2. Durch das Aufsetzen der Kopplungsmittel 4 auf die Einstellschraube wird eine Gegenkraft zur manuellen Betätigungskraft in der axialen Richtung 5 erzeugt.

Die eigentliche Bewegung des Einstellmittels erfolgt durch eine Rotation des Kopplungsmittels 4.

Diese Rotation wird erzeugt durch den Elektromotor im Inneren des Einstellwerkzeugs 1.

Mit der manuellen Betätigungskraft im Sinne dieser Anmeldung wird lediglich das Einstellwerkzeug 1 auf die Einstellmittel aufgesetzt. Die Antriebsenergie zur Bewegung der Einstellmittel ist eine Hilfsenergie und hat direkt nichts mit dieser manuellen Betätigungskraft zu tun.

Es ist weiterhin zu sehen, dass die beiden Teile 2 und 3 des Einstellwerkzeugs 1 in axialer Richtung gegeneinander verschiebbar sind. Diese beiden Teile 2 und 3 werden mittels einer Federkraft 6 auseinander gedrückt.

Wird das Einstellwerkzeug 1 mit einer manuellen Betätigungskraft auf ein Einstellmittel aufgedrückt, die oberhalb eines Schwellwertes liegt, wird die Feder 6 so weit zusammengedrückt, dass ein elektrischer Taster 7 schließt. Hierzu ist in dem Teil 2 noch ein Stempel 11 vorhanden, der bei einem Zusammendrücken der beiden Teile 2 und 3 den Taster 7 schließt. Über das Schließen dieses Tasters 7 kann ein Signal erzeugt werden, das eine manuelle Betätigungskraft auf das Einstellwerkzeug 1 oberhalb des Schwellwertes repräsentiert.

Anstelle einer Messeinrichtung für die Betätigungskraft im Sinne eines Endschalters kann auch die aufgebrachte Kraft kontinuierlich gemessen und der gemessene Wert mit dem Schwellwert verglichen werden.

Es ist zu sehen, dass das Signal des Tasters 7 einer Auswerteeinheit 8 als Eingangssignal 9 zugeführt wird.

Ein Ausgangssignal 10 der Auswerteeinheit 8 wird wiederum dem Einstellwerkzeug 1 zugeführt. Über dieses Ausgangssignal 10 wird das Einstellwerkzeug 1 gesteuert. Insbesondere wird über dieses Ausgangssignal 10 die Funktion des Blockierens des Einstellwerkzeuges realisiert, soweit diese Funktion implementiert ist. Ebenso wird ggf. über dieses Ausgangssignal die Ausgabe des haptischen Hinweissignals über das Vibrieren des Einstellwerkzeugs 1 realisiert.

Die Auswerteeinheit 8 kann auch integraler Bestandteil des Einstellwerkzeugs 1 sein.

## Patentansprüche

1. Verfahren zur Bewertung eines Signals, das die auf ein Einstellwerkzeug (1) zur elektrischen, pneumatischen und/oder hydraulischen Betätigung von Einstellmitteln zur Justierung von Aggregaten und/oder Sensoren eines Kraftfahrzeugs zumindest in dem Betriebszustand, in dem das Einstellwerkzeug (1) in Wirkverbindung mit den Einstellmitteln ist, wirkende manuelle Betätigungskraft repräsentiert, wobei die manuelle Betätigungskraft der Kraft entspricht, mit der das Einstellwerkzeug (1) auf die Einstellmittel aufgedrückt wird,
**dadurch gekennzeichnet, dass** bei einem Überschreiten eines Schwellwertes der manuellen Betätigungskraft (6, 7) der Antrieb des Einstellwerkzeugs (1) blockiert wird (8, 10) und/oder eine Bewertung eines Messsignals, das die Justierung des Aggregates und/oder des Sensors repräsentiert, nicht als ordnungsgemäß zugelassen wird und/oder ein Hinweissignal auf einen Fehlerzustand ausgegeben wird (8, 10).

2. Verfahren nach Anspruch 1,
**dadurch gekennzeichnet, dass** die Messeinrichtung (6, 7) in das Einstellwerkzeug (1) integriert oder dem Einstellwerkzeug (1) zugeordnet ist.

3. Verfahren nach Anspruch 1 oder 2,
**dadurch gekennzeichnet, dass** das Signal abgeleitet wird, indem durch die manuelle Betätigungskraft eine Feder (6) zusammengedrückt oder gestreckt wird, wobei dem Federweg ein Endpositionsschalter (7) zugeordnet ist.

4. Verfahren nach einem der Ansprüche 1 bis 3,
**dadurch gekennzeichnet, dass** eine Bewertung des Messsignals als nicht ordnungsgemäß erfolgt, indem die Eingabe eines Bestätigungssignals durch den Werker für eine ordnungsgemäße Messung blockiert wird.

5. Verfahren nach einem der Ansprüche 1 bis 3,
**dadurch gekennzeichnet, dass** das Hinweissignal auf den Fehlerzustand optisch, akustisch und/oder haptisch (10) ausgegeben wird.
